# EUROPEAN PATENT APPLICATION

(11) **EP 4 691 579 A1**
(43) Date of publication of application: **11.02.2026**
(21) Application number: 25192879.2
(22) Date of filing: 30.07.2025
(51) Int. Cl.: A63F 13/355, A63F 13/358, H04N 19/154

(54) **VISUAL QUALITY ASSESSMENT METHOD AND SYSTEM**

(30) Priority: 09.08.2024 GB 202411811
(71) Applicant: Sony Interactive Entertainment Inc., Tokyo 108-0075 (JP)
(72) Inventor: BARMAN, Nabajeet, London, W1F 7LP (GB); ZADTOOTAGHAJ, Saman, London, W1F 7LP (GB); SCHMIDT, Steven, 63263 Neu-Isenburg (DE)
(74) Representative: D Young & Co LLP

(57) **Abstract**

A visual quality assessment 'VQA' method comprises the steps of, for all or part of an image, obtaining data indicative of an intended graphical state of the image or corresponding part thereof, from a device generating the image; and performing a VQA based on the image or corresponding part thereof, wherein at least one calculation step of the VQA is modified responsive to the obtained data.

## Description

### FIELD OF THE INVENTION

The present invention relates to a visual quality assessment method and system.

### BACKGROUND

Multimedia such as images and videos are often compressed and transmitted over networks before being received by a client and then decoded for display. In this process, the multimedia might suffer from many possible degradations such as blockiness, blurriness, slicing artefacts (packet loss) and in the case of videos, additionally jittering and rebuffering. In addition, many other artefacts might appear in the source video itself such as colour (de)saturation, motion blur, etc.

In order to assess the impact of these, many models and metrics have been designed to help predict the quality of the image or video as perceived by people, most notable of which includes traditional methods such as Peak Signal to Noise Ratio (PSNR), Structural Similarity Index Measure (SSIM) and Video Multi-Assessment Method Fusion (VMAF). More recently, machine learning-based metrics have also become popular.

Notably, most of these visual quality assessment (VQA) models are designed for natural real-world imagery, and conventional animation, but not for gaming content. However with the rising popularity of cloud-based streaming of video games, similar assessments are required for streamed videogame content.

The present invention seeks to address or mitigate the above problem.

### SUMMARY OF THE INVENTION

Various aspects and features of the present invention are defined in the appended claims and within the text of the accompanying description.

In a first aspect, a visual quality assessment method is provided in accordance with claim 1.

In another aspect, a visual quality assessment system is provided in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a visual quality assessment system in accordance with embodiments of the present description.
- Figure 2 is a flow diagram of a visual quality assessment method in accordance with embodiments of the present description.

### DESCRIPTION OF THE EMBODIMENTS

A visual quality assessment method and system are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

### System

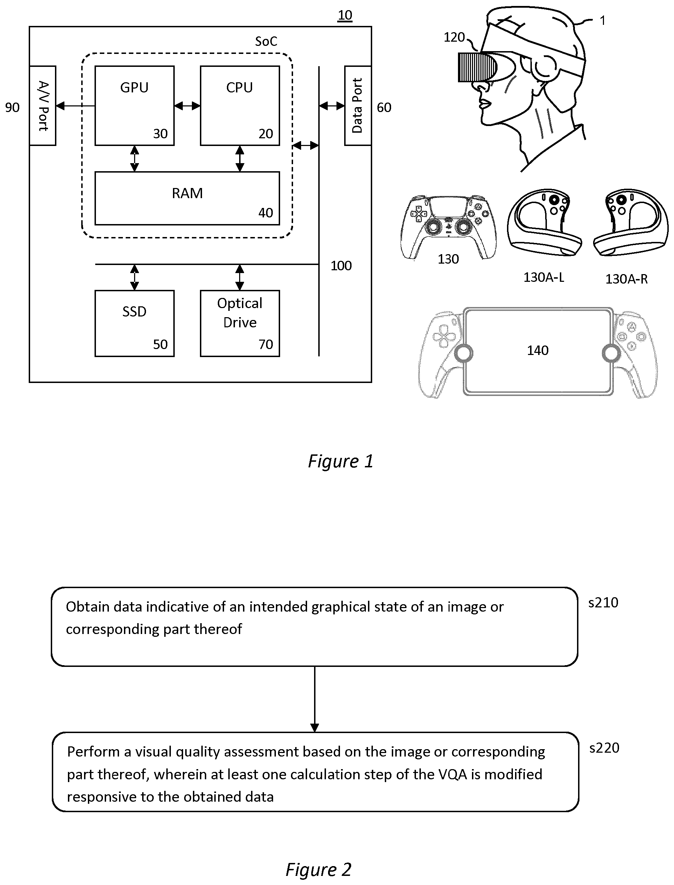

Referring now to the drawings, wherein like reference numerals designate identical or corresponding parts throughout the several views, Figure 1 shows entertainment device 10 such as a computer or videogame console, which may equally function as one of a transmitting source of gaming content for streaming, or a client receiving streamed gaming content, for the purposes of explanation herein.

The entertainment device 10 comprises a central processor or CPU 20. The entertainment device also comprises a graphical processing unit or GPU 30, and RAM 40. Two or more of the CPU, GPU, and RAM may be integrated as a system on a chip (SoC). Further storage may be provided by a disk 50.

The entertainment device may transmit or receive data via one or more data ports 60. It may also optionally receive data via an optical drive 70. Audio/visual outputs from the entertainment device are typically provided through one or more A/V ports 90 or one or more of the data ports 60. Where components are not integrated, they may be connected as appropriate either by a dedicated data link or via a bus 100.

Examples of a device for displaying images output by the entertainment system include a head mounted display 'HMD' 120 worn by a user 1, a TV (not shown), and a portable screen 140.

Interaction with the system is typically provided using one or more handheld controllers 130, 140, and/or one or more VR controllers (130A-L,R) in the case of the HMD.

Where the entertainment device is operating as a cloud server, either in a physical or virtualised form, it will be appreciated that the display of images and the capture of inputs may be by devices associated with a remote client receiving the output stream, and uploading input controller data.

As noted previously herein, the process of streaming video data can cause various reductions in image quality. In particular, blockiness and blurriness are common effects of encoding compression, packet loss and the like. For example, higher encoding compression can result in the loss of high frequency components of an image, or quantisation that reduces variability; in other words, it can result in blurriness, and when implemented in a block-wise scheme (e.g. macroblocks) can result in blockiness. Similarly, depending upon the encoding scheme, loss of packets in I- or P-image frames, or the selective provision of enhancement layers, can make images appear blocky or blurred.

These effects can result in a low visual quality assessment of conventional content.

However, sometimes blurring, or even blockiness, is deliberate. For example in a videogame, motion blur is a common effect used to create a sense of speed and (in some cases) a sense of realism, replicating the blur that occurs due to motion within a captured image frame. It can also indicate sudden acceleration within the game, for example, caused by pressing a boost button. Meanwhile, blockiness can be caused by close-up views of textures, or indeed the graphical style of the game as in for example the game Minecraft ^{®}.

Such effects should not be interpreted as a degradation of the image by a video quality assessment scheme, as this could result in incorrect data being generated for optimisation of the video streaming service and/or image generation.

Accordingly, in embodiments of the present description, a method of visual quality assessment (VQA) comprises a supplementary input representing at least a first aspect of the state of the game, corresponding to the image(s) under assessment, which provides for aspects of the image that may be misinterpreted as image degradation to be accounted for.

The game state can include one or more selected from the list consisting of:
i. texture information or meta data;
ii. polygon count data;
iii. game engine data;
iv. post-processing data; and
v. input device data.

These are discussed in turn below.

### Texture information or metadata

Games load texture data in order to provide the virtual geometry of the game environment with surface detail; i.e. cover the bare polygons with imagery corresponding to the objects, characters, and environment that those polygons represent.

Some texture data may appear low resolution as a design choice (e.g. as noted previously, in Minecraft ^{®}, Roblox ^{®} and numerous so-called 'indie' titles). This can be indicated to the VQA model so that for example spatial frequency measurements that are markedly below the native resolution of the image are not treated as an indication of unintended image degradation.

More generally however, textures can vary for practical reasons; it is inefficient, for example, to load a full-resolution texture of a person or building if that person or building is in the background of an image and hence occupies far fewer pixels than the corresponding texture.

For this reason most game use so-called mip-maps ('multum in parvo' or 'much in a small space') or similar, together with levels of detail ('LoD'). Mip-maps link multiple versions of a texture at different resolutions (usually reducing by a factor of 2x2 each time). When generating an image, a texture is loaded with a resolution associated with a level of detail, in turn typically selected based on the distance to the object being represented.

However, when the object rapidly moves closer to the user (either due to object motion or virtual camera motion), the loading of higher resolution textures may not occur fast enough as the object passes through one or more notional levels of detail. As a result the object typically must still use the lower resolution texture despite being much closer, and so the object can look blocky (or blurry, depending on subsequent post-processing steps). This can also happen more generally in an image when first accessing/displaying an environment, if low-resolution textures are loaded first as a contingency so that there is something to use in the event that (possibly many) higher resolution textures are not loaded in time for display of the image.

Providing information to indicate whether texture information in the image is not at the intended level of detail can inform the VQA model whether or not an apparent region of blockiness or blurriness is in fact an unintentional defect in the source image, and mitigate this in its score.

The information may for example comprise data or metadata about the effective resolution of a texture, for example its associated mip-map or LoD level, and optionally its median spatial frequency, or some other measure of relative blockiness of the texture pattern itself.

### Polygon count data

In a similar manner to texture data, different objects within a game may be modelled with greater or fewer polygons. As a result some may be inherently blocky compared to others. Hence depending on what is being looked at in the game, the spatial complexity of the image may vary significantly.

Again in a similar manner to texture data, some game engines prune a complex source geometry to create a simplified version for more distant renders of the object. Again in some circumstances the geometry may not get updated fast enough as the depicted object/character/environmental feature passes through one or more levels of detail, making it appear blocky or blurry.

Hence again providing information to indicate overall polygon count and/or whether any polygon model is not at the intended level of detail can inform the VQA model whether or not an apparent region of blockiness or blurriness is in fact an unintentional defect in the source image, and mitigate this in its score.

The information may come from a draw list, z-cull engine, or any other suitable point at which the number of polygons (or vertices of polygons) is already used or can be easily counted.

### Game engine data

The game engine rendering pipeline comprises a number of steps - including the polygon assembly and texturing steps alluded to above, and potentially numerous other steps.

Basic positional/motion aspects that may be controlled by the game engine include:
i. changes in camera orientation and/or position e.g. due to character motion
ii. changes of object position (e.g. due to in-game motion of the object); and
iii. motion blur

As noted above, changes in object and camera position can result in blockiness due to data loading delays, but may also cause encoding issues for example when the change in position and or orientation of the virtual camera changes significantly between image frames, making interframe encoding less efficient. When playing some competitive games, the speed of movement is unlike that seen in conventional TV and film, as the purpose is not aesthetic but competitive, and so standard encoding schemes may function comparatively poorly for such content; therefore an indication of the degree of change of viewpoint can inform the VQA model whether any ensuing image degradation may be a result of encoding issues.

Meanwhile, motion blur is a deliberate effect that can be added to image data; in some cases, it may be applied consistently (for example in the racing game), and in other cases, it may be applied occasionally, and in a manner which is not necessarily correlated with other environmental features (for example when a user instigates a speed boost mode). Consequently, an indication of the use of motion blur and optionally the level of motion blur and similarly optionally the direction of motion that the blur corresponds to can inform the VQA model whether any apparent blurring within the image is due to deliberate motion blur, and mitigate this in its score.

Basic image composition aspects that may be controlled by the game engine include:
i. changes in aspect ratio (e.g. indicating interactive and non-interactive phases of the game);
ii. draw distance (the distance in which objects pop into view or disappear); and
iii. draw distance fog (the use of fog or alpha/transparency effects to mitigate draw distance affects).

In videogames, parts of the image can appear or disappear on a frame by frame basis. The transition from full screen to letterbox (a change in aspect ratio) is known in TV and film, often to address the problem of including salient elements of the scene and hence are often associated with a scene change. Meanwhile in videogames they have evolved as a way to indicate whether or not the game as currently in an interactive mode (e.g. playing the game) or a passive mode (e.g. watching a scripted or predetermined part of the game). Hence often the aspect ratio or change without a significant change to the scene as the game segues / transitions in and out of interactivity.

Accordingly, data indicating a change of aspect ratio and/or a change of interactivity mode can inform the VQA model whether an apparent loss of image data is intentional, and mitigate this in the score.

As noted previously, when objects are at a large distance from the camera viewpoint, the quality of the object may be reduced, in terms of texture and/or polygon count. However, the game engine can go further than this and simply stop incorporating the object altogether when it is beyond a certain distance from the camera viewpoint. This is the so-called draw distance, and in some games (notably older games, which were designed for devices with lower graphics processing power), this results in objects notably popping into existence or suddenly disappearing from existence within the image.

Occasionally, to reduce the visual discontinuity that this can cause, games will impose a fog or alpha/transparency layer at or near the draw distance so that objects are at least partially obscured by this as they appear/disappear.

In either case, the game engine can provide data to inform the VQA model when objects appear and/or disappear, and whether such objects will temporarily be subject to fogging or partial alpha transparency, so that the model can mitigate this in its score.

Basic surface reflection and transmission aspects that may be controlled by the game engine include:
i. alpha/transparency effects (e.g. glass, water, and the like in the environment that serve to blur and/or distort parts of the image);
ii. surface settings (i.e. beyond mere textures) including bump mapping and similar; and
iii. specular/diffuse lighting reflection.

The computation of lighting/image reflection and transmission within the environment can be expensive, and so quite often instead of using full quality ray tracing or the like, computational shortcuts are used instead. These shortcuts can result in occasional inconsistencies and artefacts, or effects that are not as consistent with or realistic as may be found in real-world TV or movie imagery.

In addition, even when functioning as intended, different surface reflection and transmission effects can result in different amounts of original or distorted imagery, and/or crisp or blurry imagery. Without this context, a VQA model may misinterpret changes in these effects as unwanted changes in image quality. Hence the game engine can provide data to indicate to the VQA model when these effects are being used, and optionally what parts and/or proportion of the image they are being used in, so that the model can mitigate this in the score.

Basic environmental aspects that may be controlled by the game engine include:
i. volumetric effects like fog or fire;
ii. lighting (positioning, diffusion, propagation, colour, and the like); and
iii. shadows (in particular, shadow complexity as a function of object and lighting).

As noted above in relation to the draw distance, volumetric affects typically serve to partially obscure imagery behind them, and may be inherently blurry both within the effect and at its edges.

Similarly, changes in lighting can affect the colour distribution of the image and the existence and appearance of shadows (if implemented).

As noted above in relation to reflection and transmission, obstruction of light can also be complex to compute and so the generation of shadows can also be subject to short cuts that can make them comparatively blocky within an image.

Hence potentially each of these could be misinterpreted as an unwanted change in image quality.

Accordingly, information about one or more of these, as appropriate, can be used to inform the VQA model so that the model can mitigate this in the score.

Basic non-environmental aspects that may be controlled by the game engine include:
i. particle effects such as from explosions, raindrops, and the like;
ii. other non-environmentally defined elements such as lens flare; and
iii. in-game or user defined gamma/brightness settings.

Here 'non-environmental' typically means parts of the image that don't have a corresponding geometry within the virtual world. This can also include volumetric effects like fog or fire, but often these are constrained by or interact with the environment geometry.

Meanwhile particle effects and the like are typically applied largely independent of the geometry (except perhaps for a notional floor), although if controlled by a physics engine may interact with it more like a discrete form of fog. In any event, these non-environmental aspects tend to be elements that are overlaid on the remainder of the rendered environment, and are often moving rapidly or are transitory relative to the ongoing scene.

As such, they can be misinterpreted for example as noise in the image by the VQA model. Accordingly, information about one or more of these, as appropriate, can be used to inform the VQA model so that the model can mitigate this in the score.

The information for any aspect of the game engine data could be reported by the game engine itself as needed.

### Post-processing data

Whilst some effects such as lens flare or particle effects may be considered a form of post-processing, more generally whole image processing, or processing applied when the image is at least partially rendered, may be considered post-processing.

This may particular include accessibility processing such as for example:
i. using high contrast colour schemes on some or all of the image;
ii. using colour blindness aware colour schemes on some or all of the image; and
iii. using object highlighting or colouring within the image.

Such changes in effect alter the colour gamut of the video to one that is not standard and could be mistaken by the VQA model, for example, as indicative of poor transcoding or other codex or transmission problems. Accordingly, information about one or more of these, as appropriate, can be used to inform the VQA model so that the model can mitigate this in the score.

It can also include effects often related to simulated changes in the game character's perception:
i. colour desaturation when on low health;
ii. red or other warning colours around the edge of the image or in a region indication a direction from which damage is received; and
iii. change to some alternate perception mode (e.g. seeing in infra-red).

Again such changes in effect alter the colour gamut of the video to one that is not standard, and in this case may appear to be temporary drops in quality compared to a baseline or calibrated initial video stream, as they tend to reflect temporary game states. Hence again information about one or more of these, as appropriate, can be used to inform the VQA model so that the model can mitigate this in the score.

The information for any aspect of the post processing data could be reported by the post-processor itself (or the game engine if it fulfils that role) as needed.

It will be appreciated that more generally, each one of the texture information or meta data, polygon count data, game engine data, and post-processing data, can be thought of collectively as data indicative of the graphical state of the image as defined by the game state at the time, and hence in effect the intended graphical state - even if that state deliberately includes elements traditionally associated with image degradation such as blur, blockiness, noise, or colour desaturation. Providing information about this with the image to the VQA model allows it to take account of these when determining a quality score.

### Input device data

Alternatively or in addition to one or more of the above data sources, information about signals from one or more input devices may be used to inform the VQA model.

Hence for example, if the user presses the button on their controller associated with a fast dash, the system can anticipate that the next image frame (or one shortly thereafter, for example after an transition animation) will display bluffing effects.

In this case, a configuration file can provide associations (e.g. as a look-up table) between buttons (and any other controller inputs such as joysticks, triggers and touch panels) and changes in game state that have associated changes in generated images, whether this includes panning the virtual camera as the character looks around, moving the virtual camera as the character moves around, changing post processing if the character switches to night vision or the like. Optionally further information can be provided, such as input sensitivity for joystick- or mouse-like movement, for example, which may affect how quickly a scene pans compared to traditional TV or movies.

In addition, some buttons may in effect interrupt the scene in a manner that is not necessarily obvious if not indicated to the VQA model; for example, pressing a menu button may result in a temporarily black screen, before menu items are provided - which may otherwise be interpreted as a transmission loss and/or a temporary pause of the scene, optionally with a colour overlay, before menu items are provided which may similarly be interpreted as a transmission breakdown of some form.

Notifying the VQA model of user inputs can provide advance warning of graphical effects and interruptions, which allows the VQA to take account of these when determining a quality score.

It will be appreciated that more generally, at least a subset of input data from one or more controllers or other user input means can be thought of collectively as indicators of imminent changes to game state that will alter the graphical state of the image in a predefined way.

Consequently with user inputs a VQA model can have forewarning of changes to a video it may otherwise have interpreted as image degradation, and with graphical state data the VQA can account for effects in a current image/video that it may otherwise have interpreted as image degradation.

### Visual quality assessment

There are numerous VQA schemes, but three popular ones that may be used for the purposes of explanation are as follows:

### PSNR (Peak Signal to Noise Ratio)

In effect this is a basic comparison of a source image to a compressed / transmitted image. The value will vary depending on how faithfully the codec / transmission path preserved the image. However, it will be appreciated that changes in the blurriness, blockiness, colour gamut, and the like of the source image can affect both the range of values within the source image but also the assessed performance of the codec / transmission path. Accordingly information about the source image can be used to mitigate the PSNR measure, for example changing weighting of certain image scores when computing an average or for the PSNR ave.MSE (mean squared error) variant, mitigating images deemed lower quality where that can be explained at least in part by the graphical state of the source image.

### SSIM (Structural Similarity Index Measure)

This scheme reviews brightness, contrast, and structure. It is particularly sensitive to blurring and distortion, noise, and colour events like desaturation. Accordingly effects such as motion blur, particle effects, and accessibility or character perception effects can affect both the range of values within the source image and also the assessed performance of the codec / transmission path. Accordingly information about the source image can be used to mitigate the SSIM measure by weighting or otherwise adjusting the respective input variables to the measurement in response to the information about the source image discussed elsewhere herein.

### (VMAF) Video Multi-Assessment Method Fusion

This scheme is increasingly popular, and combines a number of metrics to create a scheme that is more robust to a wider variety of image content. Primary among these are Visual Information Fidelity (VIF) related to distortion, Additive Distortion Metric (ADM) related to loss of detail, and motion based on adjacent frame. The metrics also tend to be resolution specific and so different metric models should be used for different effective resolution.

Again it will be appreciated that motion blur (as an effect separate to actual virtual camera motion), colour changes, and changes in texture resolution (particularly within a single image), and the like of the source image can affect both the range of values within the source image but also the assessed performance of the codec / transmission path. Accordingly, information about the source image can be used to mitigate the VMAF measure, for example by mitigating the output of certain metrics associated with particular aspects of the image such as blur, noise, colour, and the like, and effective resolution.

### Machine Learning

VQA schemes based on Machine Learning typically take images, or relevant abstractions thereof, as inputs, and use the results of several existing VQA schemes and/or real human assessments as target outputs, in order to learn what aspects of the input data predict the target assessment. Machine learning can take a number of forms, one of which is deep-learning that uses artificial neural networks, typically with several hidden layers (hence the 'deep' term), to model tasks or transformations with complex relationships between input and output.

### Other models

As noted previously herein, other VQA models exist that are suitable for the techniques herein, including for example VQAs based on Vision-Language Models. Often these are large language models that have also been trained on images, and have consequently internalised an assessment of image quality from image captioning and the like within their training set. As a result they can be useful when, for example, also being used to caption or summarise images from the game to also assess the image quality. In principle they can also be used in real-time for VQA purposes if there is sufficient computing resource available. More generally, they are models that provide a fusion of semantic content with distortion characteristics and appearance properties such those described elsewhere herein.

### Encoding and Streaming

In the above VQA summaries, 'the codec' may be a candidate codec, or a candidate codec setting (e.g. a quantisation setting), that the streaming service providing the game chooses to use to transmit the image.

Accordingly, the VQA may be used to evaluate whether a candidate quantization level would provide an acceptable image quality to the user for the current image, or a part thereof; the graphical state information discussed herein can be used by the VQA to provide a game-state aware score, so that, for example, a greater amount of quantization might be applied when it is known that the image comprises intentional motion blur.

For example, in VMAF (and other VQA schemes), very high motion content (which often occurs in gaming) often leads to a phenomenon known as temporal masking, which is an important aspect for video quality assessment. In this case the presence of spatial, temporal, or spatiotemporal distortions does not imply a corresponding degree of perceptual quality degradation, since the visibility of distortions can be strongly reduced or completely removed by visual masking. Such information can be used in the design of temporal pooling strategies to pool frame-level quality scores for a video quality prediction score (instead of using simple measures such as average pooling or geometric mean pooling).

Hence more generally, the graphical state of the image (and/or an input state indicative of an imminent change to the graphical state) based on information such as that described elsewhere herein, can be used to modify the calculations of VQA method (and/or, potentially, select from among several methods the one best suited to evaluation the current graphical state), to improve the quality assessment of the encoded / compressed image by altering the assessment based on deliberate features of the image that might otherwise be misinterpreted to either incorrectly reduce or, indeed, boost a visual quality assessment score.

The result is an encoding scheme that, all else being equal, can use the game information to provide a better quality image at the client device, as assessed by human perception, than would otherwise be the case.

### Variants

Alternatively or in addition to using a VQA scheme modified by the techniques herein to adjust one or more options / parameters of a streaming process for a game, the scheme may be used for other purposes.

For example, such a scheme may be used to assess the recommended minimum bandwidth for a user who wishes to stream a game, as different games may be more tolerant of different (and greater) compression as a consequence of the game content, or similarly an assessment of likely relative perceived quality as a function of bandwidth. Similarly, the scheme may be used to provide an assessment of likely perceived quality on different devices; for example perceived quality may differ when the device is a mobile phone, tablet, or smart TV, due to the relative screen sizes. It will also be appreciated that this may also affect the recommended minimum bandwidth for similar reasons, so that this may differ for different client device types / screen sizes.

The streaming server can then provide such information, optionally tailored to the type of client device, so that a user can have an informed choice.

Alternatively or in addition, VQA assessments can be aggregated for different sections of a game; hence for example a boss-battle may have different contributory factors to perceived image quality than an earlier interaction with a friendly non-player character. Likewise different environments (e.g. a foggy swamp vs a sunlit city) may have different scores. This information can be accumulated for example during quality assurance testing, or from early players of the game.

Using this information, it is possible to provide a more focussed assessment for a user. Recognising that typically a user may be switching between devices over the course of playing a game (for example using a videogame console at home and then a phone when out) the assessment for recommendations can be made more specific, and relate to the region or part of a game that the user is likely to play next, for example based on a latest 'continue' save game associated with the user.

This can enable a user to decide which of their games is currently best to continue playing when on the move, based on current device, current bandwidth, and/or current in-game situation for one or more games.

### Summary

Referring now to Figure 2, in a summary embodiment of the present description, a visual quality assessment 'VQA' method comprises the following steps, for all or part of an image:
In a first step s210, obtain data indicative of an intended graphical state of the image or corresponding part thereof, from a device generating the image, as described elsewhere herein.

In a second step s220, perform a VQA based on the image or corresponding part thereof, wherein at least one calculation step of the VQA is modified responsive to the obtained data, as described elsewhere herein.

It will be appreciated that a VQA model can also take account of past or future images (e.g. in an assessment of motion) when assessing an image. It will also be appreciated that a VQA can take the form of an average assessment (or an average of assessments) over multiple frames in a video sequence, depending on the use-case.

It will be apparent to a person skilled in the art that variations in the above method corresponding to operation of the various embodiments of the apparatus as described and claimed herein are considered within the scope of the present invention, including but not limited to that:
- the data indicative of an intended graphical state of the image or corresponding part thereof comprises one or more selected from the list consisting of texture information or meta data, polygon count data, game engine data, and post-processing data, as described elsewhere herein;
   - in this case, optionally the game engine data comprises one or more selected from the list consisting of data relating to location, position, or motion in the image, data relating to the composition of the image, data relating to surface reflection or transmission in the image, volumetric effects in the image, lighting or shadow in the image, and data relating to graphical effects not defined by corresponding geometry in a virtual world depicted by the image, as described elsewhere herein;
   - similarly in this case, optionally the post-processing data comprises one or more selected from the list consisting of data relating to graphical processes applied in response to accessibility settings, and data relating to simulated changes to in-game character perception, as described elsewhere herein;
- the data indicative of an intended graphical state of the image or corresponding part thereof comprises input device data, as described elsewhere herein;
   - in this case, optionally the method comprises the step of determining an intended graphical state of the image or corresponding part thereof with reference to a correspondence between a user input indicated by the input device data, and an in-game response to that user input that alters the graphical state (either immediately or imminently), as described elsewhere herein;
- the VQA model is one selected from the list (at least) consisting of peak signal-to-noise ratio, structural similarity index measure, video multi-assessment method fusion, machine learning, deep-learning, and vision language model based, as described elsewhere herein, although it will be appreciated that the techniques herein can be applied to any suitable VQA model/calculation;
- the method comprises the steps of comprising the steps of selecting for all or part of the image at least a first codec parameter, responsive to the modified visual quality assessment; and outputting (e.g. within a stream) the image encoded using the codec with the selected parameter, as described elsewhere herein;
- the method comprises the steps of selecting for all or part of the image at least a first codec, responsive to the modified visual quality assessment, and outputting the image encoded using the selected codec, as described elsewhere herein;
- the method comprises the step of aggregating visual quality assessments for at least a portion of a game comprising multiple images to generate an overall VQA, for one or more of different streaming bandwidths, and different client device screen sizes, as described elsewhere herein;
   - in this case, optionally the method comprises the step of outputting data for a user indicating one or more of a recommended minimum bandwidth for streaming, whether a user's client device currently meets a recommended bandwidth for streaming, and a relative quality measure for the screen size of the user's client device, based upon an overall VQA, as described elsewhere herein;
- similarly in this case, optionally the method comprises the step of outputting data for a user indicating a relative quality measure for each of a plurality of games, based upon one selected from the list consisting of an overall VQA of each respective game, and an overall VQA of a portion of each respective game estimated as the next portion of the game that will be played by the user, as described elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a nontransitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring again to Figure 1, in a summary embodiment of the present description a visual quality assessment 'VQA' system is provided - e.g. entertainment device 10, either as a standalone device (e.g. for peer-to-peer streaming or live streaming to a distribution host), or as a real or virtualised device in a cloud streaming service, optionally also providing the encoding / streaming functionality or operating together with a separate streaming sever (not shown). Further optionally the VQA system may comprise the client device (e.g. performing test / ground truth evaluations on received images and feeding the results back to the transmission source).

In any event, the VQA system comprises:
A state processor (e.g. CPU 20 and/or GPU 30) configured (e.g. by suitable software instruction) to obtain data indicative of an intended graphical state of an image or a corresponding part thereof from a device generating the image (which may be the same device), as described elsewhere herein.

And, a visual quality assessment processor (e.g. CPU 20 and/or GPU 30) configured (e.g. by suitable software instruction) to perform a VQA based on the image or corresponding part thereof, wherein at least one calculation step of the VQA is modified responsive to the obtained data, as described elsewhere herein.

It will be appreciated that a VQA model can also take account of past or future images (e.g. in an assessment of motion) when assessing an image. It will also be appreciated that a VQA can take the form of an average assessment (or an average of assessments) over multiple frames in a video sequence, depending on the use-case.

Instances of this summary embodiment implementing the methods and techniques described herein (for example by use of suitable software instruction) are envisaged within the scope of the application, including but not limited to that:
- the data indicative of an intended graphical state of the image or corresponding part thereof comprises one or more selected from the list consisting of texture information or meta data, polygon count data, game engine data, post-processing data, and input device data, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A visual quality assessment 'VQA' method, comprising:
for all or part of an image,
obtaining data indicative of an intended graphical state of the image or corresponding part thereof, from a device generating the image; and
performing a VQA based on the image or corresponding part thereof;
wherein at least one calculation step of the VQA is modified responsive to the obtained data.

2. The method of claim 1, in which the data indicative of an intended graphical state of the image or corresponding part thereof comprises one or more selected from the list consisting of:
i. texture information or meta data;
ii. polygon count data;
iii. game engine data; and
iv. post-processing data.

3. The method of claim 2, in which game engine data comprises one or more selected from the list consisting of:
i. data relating to location, position, or motion in the image;
ii. data relating to the composition of the image;
iii. data relating to surface reflection or transmission in the image;
iv. volumetric effects in the image;
v. lighting or shadow in the image; and
vi. data relating to graphical effects not defined by corresponding geometry in a virtual world depicted by the image.

4. The method of claim 2, in which post-processing data comprises one or more selected from the list consisting of:
i. data relating to graphical processes applied in response to accessibility settings; and
ii. data relating to simulated changes to in-game character perception.

5. The method of any preceding claim, in which data indicative of an intended graphical state of the image or corresponding part thereof comprises input device data.

6. The method of claim 5, comprising the step of:
determining an intended graphical state of the image or corresponding part thereof with reference to a correspondence between a user input indicated by the input device data, and an in-game response to that user input that alters the graphical state.

7. The method of any preceding claim, in which the VQA is one selected from the list consisting of:
i. peak signal to noise ratio;
ii. structural similarity index measure;
iii. video multi-assessment method fusion;
iv. machine-learning based;
v. deep-learning based; and
vi. vision language model based.

8. The method of any preceding claim, comprising the steps of:
selecting for all or part of the image at least a first codec parameter, responsive to the modified visual quality assessment; and
outputting the image encoded using the codec with the selected parameter.

9. The method of any preceding claim, comprising the steps of:
selecting for all or part of the image at least a first codec, responsive to the modified visual quality assessment; and
outputting the image encoded using the selected codec.

10. The method of any preceding claim, comprising the step of:
aggregating visual quality assessments for at least a portion of a game comprising multiple images to generate an overall VQA, for one or more of:
i. different streaming bandwidths; and
ii. different client device screen sizes.

11. The method of claim 10, comprising the step of:
outputting data for a user indicating one or more of:
i. a recommended minimum bandwidth for streaming;
ii. whether a user's client device currently meets a recommended bandwidth for streaming; and
iii. a relative quality measure for the screen size of the user's client device,
based upon an overall VQA.

12. The method of claim 10 or claim 11, comprising the step of
outputting data for a user indicating a relative quality measure for each of a plurality of games, based upon one selected from the list consisting of:
i. an overall VQA of each respective game; and
ii. an overall VQA of a portion of each respective game estimated as the next portion of the game that will be played by the user.

13. A computer program comprising computer executable instructions adapted to cause a computer system to perform the method of any one of the preceding claims.

14. A visual quality assessment 'VQA' system, comprising:
a state processor configured to obtain data indicative of an intended graphical state of an image or a corresponding part thereof from a device generating the image; and
a visual quality assessment processor configured to perform a VQA based on the image or corresponding part thereof;
wherein at least one calculation step of the VQA is modified responsive to the obtained data.

15. The system of claim 14, in which the data indicative of an intended graphical state of the image or corresponding part thereof comprises one or more selected from the list consisting of:
i. texture information or meta data;
ii. polygon count data;
iii. game engine data;
iv. post-processing data; and
v. input device data.
